# FASCICULE DE BREVET EUROPEEN

(11) **EP 3 094 504 B1**
(45) Date de publication et mention de la délivrance du brevet: **14.03.2018**
(21) Numéro de dépôt: 15701684.1
(22) Date de dépôt: 09.01.2015
(51) Int. Cl.: B60C 11/13, B60C 11/04

(54) **DISPOSITIF ANTI BRUIT NERVURÉ POUR PNEU**
GERIPPTE LÄRMSCHUTZVORRICHTUNG FÜR REIFEN
RIBBED ANTI-NOISE DEVICE FOR TYRE

(30) Priorité: 17.01.2014 FR 1450401
(43) Date de publication de la demande: 23.11.2016
(73) Titulaire: Compagnie Générale des Etablissements Michelin, 63000 Clermont-Ferrand (FR)
(72) Inventeur: BOURGEOIS, Frédéric, F-63040 Clermont-Ferrand Cedex 9 (FR); BRUNEAU, François-Xavier, F-63040 Clermont-Ferrand Cedex 9 (FR); MUHLHOFF, Olivier, F-63040 Clermont-Ferrand Cedex 9 (FR)
(74) Mandataire: Diernaz, Christian
(86) Numéro de dépôt international: PCT/EP2015/050357
(87) Numéro de publication internationale: WO 2015/107008

(56) Documents cités:
- FR-A1- 2 983 431
- JP-A- 2010 052 699

## Description

### DOMAINE DE L'INVENTION

La présente invention concerne les bandes de roulement de pneu et plus particulièrement les bandes de roulement comprenant des rainures ces dernières étant pourvues de dispositifs de fermeture pour réduire le bruit généré par la mise en résonance de l'air dans ces rainures lors du roulage.

### ÉTAT DE LA TECHNIQUE

Il est connu que le passage dans le contact d'un pneu en roulage sur une chaussée génère une circulation d'air dans chaque rainure notamment les rainures d'orientation générale circonférentielle. Avec la chaussée chaque rainure forme un tuyau ayant deux extrémités ouvertes.

L'air dans ce tuyau forme une colonne d'air en vibration dont la fréquence de résonance dépend de la longueur séparant les deux extrémités du tuyau et en conséquence de la longueur de rainure affectée par le contact avec la chaussée.

Cette résonance de l'air dans les rainures a comme conséquence de générer, dans un véhicule équipé avec ces pneus, un bruit à l'intérieur du véhicule et un bruit à l'extérieur du véhicule. Ces bruits intérieur et extérieur correspondent le plus souvent à une fréquence voisine de ou égale à 1 kHz correspondant à une fréquence particulièrement sensible à l'oreille humaine.

Afin de réduire un tel bruit de résonance, il est connu de disposer (voir par exemple le document de brevet FR2715891), dans chaque rainure d'orientation circonférentielle ou globalement circonférentielle, une pluralité de membranes ou lames flexibles relativement peu épaisses en mélange de caoutchouc, chaque membrane ou lame flexible occupant toute la section de la rainure ou à tout le moins une grande partie de cette section pour former un dispositif de fermeture.

Chaque lame flexible peut s'étendre à partir du fond de la rainure ou être fixée à l'une au moins des parois délimitant ladite rainure. Par relativement peu épaisse, on entend que chaque lame flexible est apte à fléchir pour ouvrir au moins partiellement la section de la rainure sous l'effet d'un flux de liquide notamment lors d'un roulage par temps de pluie. Ces mêmes lames restent en position de fermeture de la rainure lors de roulage par temps sec et bloquent ainsi la circulation d'air.

Grâce à ces lames flexibles, la longueur de la colonne d'air dans chaque rainure circonférentielle est réduite par rapport à la longueur totale de la rainure dans le contact, ce qui conduit à un changement de la fréquence de résonance. Le déplacement de fréquence se fait vers des valeurs de fréquences de résonance moins sensibles à l'oreille humaine.

Bien entendu, pour conserver la fonction de drainage de l'eau, en cas de roulage sur chaussée revêtue d'eau, il est nécessaire que chaque membrane puisse fléchir d'une façon appropriée sous l'action de la pression de l'eau et ainsi ouvrir au moins partiellement la section de la rainure pour permettre un flux de liquide suffisant.

### Définitions :

Un bloc est un élément en relief formé sur la bande de roulement qui est délimité par des creux ou rainures et comprenant des parois latérales et une face de contact destinée à venir en contact avec la chaussée. Cette face de contact a un centre géométrique défini comme le barycentre ou centre de gravité de la face.

Une nervure est un élément en relief formé sur une bande de roulement, cet élément s'étendant dans la direction circonférentielle et faisant le tour du pneu. Une nervure comprend deux parois latérales et une face de contact, cette dernière étant destinée à venir en contact avec la chaussée pendant le roulage.

Par direction radiale, on entend dans le présent document toute direction qui est perpendiculaire à l'axe de rotation du pneu (cette direction correspond à la direction de l'épaisseur de la bande de roulement).

Par direction transversale ou axiale, on entend une direction parallèle à l'axe de rotation du pneu.

Par direction circonférentielle, on entend une direction qui est tangente à tout cercle centré sur l'axe de rotation. Cette direction est perpendiculaire à la fois à la direction axiale et à une direction radiale.

Par axialement vers l'extérieur, on entend une direction qui est orientée vers l'extérieur de la cavité interne du pneu.

Plan équatorial médian: plan perpendiculaire à l'axe de rotation et passant par les points du pneu axialement les plus à l'extérieur, ce plan équatorial divisant le pneu en deux moitiés égales ou sensiblement égales.

Les conditions usuelles de roulage du pneu ou conditions d'utilisation sont celles qui sont définies par la norme E.T.R.T.O. ; ces conditions d'utilisation précisent la pression de gonflage de référence correspondant à la capacité de charge du pneu indiquée par son indice de charge et son code vitesse. Ces conditions d'utilisation peuvent aussi être dites "conditions nominales" ou "conditions d'usage".

Une découpure désigne de manière générique soit une rainure soit une incision et correspond à l'espace délimité par des parois de matière se faisant face et distantes l'une de l'autre d'une distance non nulle (dite "largeur de la découpure"). Ce qui différencie une incision d'une rainure c'est précisément cette distance ; dans le cas d'une incision, cette distance est appropriée pour permettre la mise en contact au moins partielle des parois opposées délimitant ladite incision au moins lors du passage dans le contact avec la chaussée. Dans le cas d'une rainure, les parois de cette rainure ne peuvent venir en contact l'une contre l'autre dans les conditions usuelles de roulage.

La surface de roulement d'une bande de roulement correspond à la surface de la bande venant en contact avec un sol lors du roulage d'un pneu pourvu d'une telle bande.

Comme cela a été rappelé, les dispositifs formés de lames flexibles décrits dans l'art antérieur de par la nécessité de pouvoir fléchir sous un flux de liquide - sont reliés soit au fond d'une rainure soit à l'une des parois latérales délimitant une rainure. Dans ces deux cas, ces lames viennent au contact avec la chaussée lors du roulage. Lors de ce contact il se produit un phénomène de glissement relatif entre chaque lame et la chaussée et donc un frottement conduisant à une usure de la lame. Il a toutefois été constaté que l'usure de ces lames flexibles n'était pas en phase avec l'usure moyenne de la bande de roulement. On a pu constater en effet une usure différentielle avec le pneu qui amène chaque lame à être décalée vers l'extérieur par rapport à la surface de roulement après usure partielle. Outre le fait que cela n'est pas particulièrement esthétique, ces lames étant en protubérance par rapport à la surface de roulement, il se produit à chaque passage dans le contact avec la chaussée un choc de chaque lame avec ladite chaussée, ce choc étant générateur de bruit.

Le document FR 2983431 A1 montre une variante d'un dispositif comportant des lames flexibles liées au fond d'une rainure, cette variante combinant une lame flexible et une surépaisseur s'étendant le long de la liaison de la lame avec le fond de la rainure. Cette surépaisseur appropriée pour faciliter le moulage est toutefois sans effet sur l'usure de la lame dans la partie venant en contact avec une route pendant le roulage.

Le besoin s'est fait sentir d'obtenir un dispositif réducteur de bruit de résonance dans les rainures qui s'use plus régulièrement ou bien qui s'use de façon à être en léger retrait par rapport à la surface de roulement.

### BREF EXPOSÉ DE L'INVENTION

La présente invention est un perfectionnement des dispositifs anti bruit de résonance comprenant une pluralité de lames flexibles et vise à la fois à obtenir une usure plus régulière tout en facilitant le moulage et le démoulage de ces lames flexibles.

À cet effet, l'invention a pour objet une bande de roulement pour pneu, comprenant au moins une rainure, cette rainure étant délimitée par deux parois en vis-à-vis reliées entre elles par un fond de rainure, cette rainure ayant une largeur et une profondeur, cette rainure comprenant au moins un dispositif réducteur de bruit de résonance, ce dispositif étant formé d'au moins une lame de gomme flexible fixée soit à l'une des parois délimitant la rainure soit sur son fond, cette lame flexible fermant au moins partiellement la section de la rainure, chaque lame flexible comprenant deux parois principales fermant au moins partiellement la section de la rainure, des parois d'extrémité délimitant ces parois principales et une paroi de liaison avec la bande de roulement, cette paroi de liaison étant liée soit à une paroi latérale soit au fond de la rainure.

Ce dispositif réducteur de bruit de résonance est caractérisé en ce que chaque lame flexible comprend, sur l'une au moins de ses parois principales, au moins une nervure en relief, cette nervure comprenant deux extrémités, une première extrémité positionnée sur la paroi de liaison (ou face de liaison) avec la bande de roulement et une seconde extrémité positionnée par rapport à la paroi de liaison à une distance au moins égale à 50% de la longueur totale de la lame flexible, cette longueur de la lame flexible étant mesurée - dans une direction perpendiculaire à la paroi de liaison avec la bande de roulement - entre la paroi de liaison et la paroi d'extrémité opposée à ladite paroi de liaison.

Chaque nervure en relief ainsi formée s'étend sur la lame de manière à s'éloigner de la paroi de liaison avec la bande de roulement pour se rapprocher de la paroi d'extrémité opposée.

Avantageusement, chaque nervure de relief a une épaisseur maximale qui est au moins égale à 0.15 fois l'épaisseur de la lame et au plus égale à 2 fois la même épaisseur et a une largeur maximale au moins égale à 0.8 fois l'épaisseur de la lame et au plus égale à 4 fois la même épaisseur. L'épaisseur d'une lame flexible est mesurée comme la distance moyenne séparant les deux parois principales de la lame.

Par une modulation de la rigidité de chaque lame flexible au contact de la chaussée, il a été observé de façon surprenante que le contact de frottement entre la chaussée et la lame flexible pourvue d'au moins une nervure de relief était suffisamment affecté pour modifier la forme de l'usure de ladite lame flexible et permettre d'obtenir une meilleure forme d'usure plus compatible avec les exigences de la clientèle en matière d'esthétique. Bien entendu, il est nécessaire de dimensionner ces nervures de relief de façon que l'ajout de rigidité ne nuise pas à la fonction recherchée à savoir une flexibilité suffisante sous l'effet d'un écoulement de liquide afin d'assurer une performance satisfaisante en roulage par temps de pluie.

En outre la présence d'au moins une nervure de relief est favorable au moment du moulage du pneu puisque dans le moule du pneu, ces nervures de relief correspondent à des canaux d'alimentation en matière caoutchoutique pour former la lame flexible. Dès lors que ces canaux s'étendent sur une assez grande partie de l'élément, le moulage s'en trouve amélioré. Par ailleurs, le démoulage est également amélioré notamment par une meilleure résistance de chaque lame flexible au déchirement.

Préférentiellement chaque nervure a une forme demi-cylindrique ayant un rayon au moins égal à l'épaisseur de la lame flexible (distance entre les parois principales).

Dans une variante de réalisation, une lame flexible - portée par une paroi délimitant une rainure ou par le fond de la rainure, comprend au moins une nervure, cette nervure ayant un tracé qui n'est pas rectiligne. Avantageusement, ce tracé peut être curviligne, ondulant ou zigzaguant.

Encore plus avantageusement, chaque lame flexible portée par une paroi délimitant une rainure comprend au moins deux nervures s'étendant en direction des coins de la lame flexible et suffisamment près desdits coins pour avoir un effet sur l'ensemble de la lame. Par coin, on entend ici la région de la lame flexible qui est voisine de l'intersection de deux parois d'extrémité.

Préférentiellement, des nervures sont formées sur les deux parois principales d'une lame flexible. Les nervures peuvent être formées sur chaque paroi de façon être décalées les unes par rapport aux autres lorsque l'on considère leur répartition sur chaque paroi.

Les nervures peuvent avoir une épaisseur variable sur leur longueur prise entre leurs deux extrémités. De façon préférentielle, cette épaisseur est décroissante à partir de l'extrémité de la nervure située sur la zone de liaison de la lame avec une paroi ou un fond de rainure et jusqu'à l'autre extrémité de la nervure.

De façon avantageuse, chaque nervure de relief a une épaisseur qui est au moins égale à 0.15 fois l'épaisseur de la lame - mesurée en dehors des zones avec surépaisseur, et au plus 1.2 fois la même épaisseur.

Ce dispositif réducteur de bruit peut bien entendu être mis en oeuvre avec tout type de rainure, que ce soit une rainure d'orientation circonférentielle, ou transversale ou oblique.

D'autres caractéristiques et avantages de l'invention ressortent de la description faite ci-après en référence aux dessins annexés qui montrent, à titre d'exemples non limitatifs, des formes de réalisation de l'objet de l'invention.

### BRÈVE DESCRIPTION DES FIGURES

Les figures 1 et 2 montrent une première variante selon l'invention d'un dispositif de fermeture à l'état fermé ;
Les figures 3 et 4 montrent une deuxième variante de l'invention ;
La figure 5 montre une troisième variante de l'invention ;
La figure 6 montre une quatrième variante de l'invention ;
La figure 7 montre une cinquième variante de l'invention.

### DESCRIPTION DES FIGURES

Pour les figures accompagnant cette description, des mêmes signes de référence peuvent être employés pour décrire des variantes de l'invention dès lors que ces signes de référence renvoient à des éléments d'une même nature, que cette nature soit structurelle ou bien fonctionnelle.

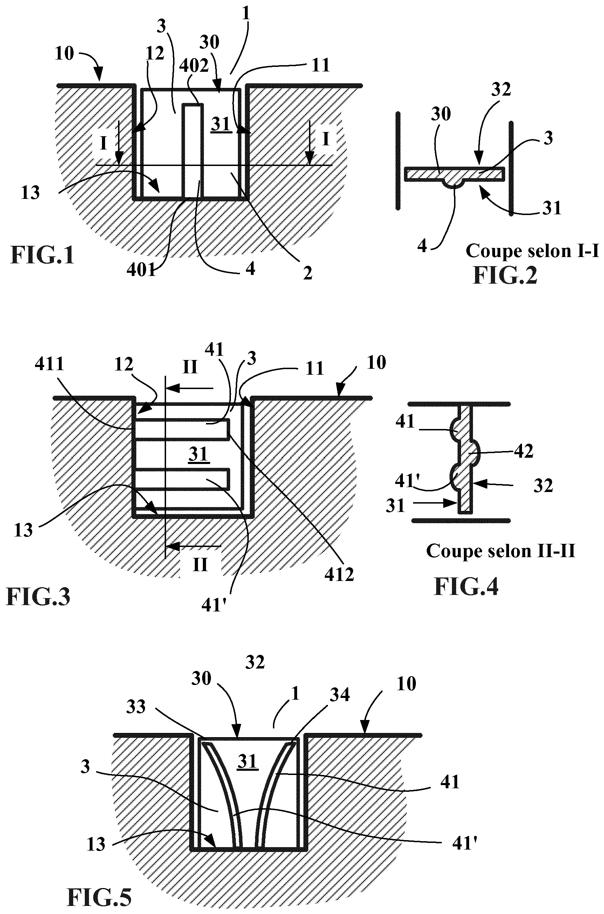

Les figures 1 et 2 montrent une variante selon l'invention d'un dispositif de fermeture à l'état fermé.

Dans cette première variante, une bande de roulement comprend une rainure 1 s'ouvrant sur la surface de roulement 10 de la bande ; cette rainure 1 est délimitée par deux parois 11, 12 en vis-à-vis, ces parois étant reliées par un fond 13 de rainure. Cette rainure 1 comprend une pluralité de dispositifs réducteurs de bruit de résonance 2, ces dispositifs étant régulièrement répartis dans la rainure 1.

Chaque dispositif 2 est formé par une lame flexible 3 unique moulée avec la bande de roulement. La figure 1 montre une telle lame flexible 3 obturant quasiment en totalité la section transversale de la rainure 1 à l'état neuf de la bande. Cette lame flexible 3 a une épaisseur moyenne égale à 0.6 mm et est apte à fléchir sous l'action d'un flux de liquide s'écoulant dans la rainure 1 notamment lors de roulage par temps de pluie.

Cette lame flexible 3 est solidaire du fond 13 de la rainure et comprend des faces principales 31, 32 obturant la section transversale de la rainure ; une face principale 31 est visible sur la figure 1. Cette lame flexible 3 comprend en outre des faces d'extrémité dont une face de contact 30 qui est destinée à venir en contact avec le sol pendant le roulage et une autre face dite face de liaison avec le fond 13. À l'état neuf, la face de contact 30 de la lame flexible est en léger décalage vers l'intérieur par rapport à la surface de roulement 10.

En outre cette lame flexible 3 comprend sur une de ses faces principales 31, une nervure 4 de renforcement en relief ayant une forme allongée et de section semi circulaire. Cette nervure 4 comprend deux extrémités, une première extrémité 401 est liée au fond de la rainure et une seconde extrémité 402 est proche de la face d'extrémité de la lame destinée à venir en contact avec un sol lors du roulage. La longueur de cette nervure 4 mesurée entre ses deux extrémités est ici égale à 80% de la hauteur de la lame mesurée perpendiculairement à sa face de liaison avec le fond de la rainure. Cette nervure de relief 4 prend naissance sur le fond 13 de la rainure et s'étend sur quasiment toute la hauteur de la lame flexible, c'est-à-dire quasiment jusqu'à la face de contact 30 de la lame. Cette nervure 4 est positionnée au milieu de la face principale 31. Ainsi le surcroit de rigidité généré par la présence de cette nervure 4 est limité pour permettre la flexion de la lame 3 sous l'action d'un écoulement de liquide dans la rainure mais suffisant pour modifier les conditions de contact de la lame lors du roulage avec la chaussée. Il s'ensuit une amélioration de l'usure de la lame flexible 3 puisque cette lame 3 voit sa face de contact 30 venant à chaque tour de roue en contact avec la chaussée sensiblement au même niveau par rapport à la surface de roulement 10 de la bande de roulement et non plus faisant protrusion par rapport à cette surface après une usure partielle de la bande.

Dans le cas présent, la nervure 4 visible sur la figure 2 qui est une coupe selon la ligne I-I montrée sur la figure 1, est formée sur une seule face principale 31. Il est ainsi en outre possible de bénéficier d'un effet directionnel en positionnant cette nervure 4 de façon à limiter la flexion dans une direction comparativement à la flexion dans une direction opposée.

Dans une deuxième variante de l'invention montrée avec les figures 3 et 4, une bande de roulement comprend au moins une rainure 1 portant sur l'une des parois 11, 12 délimitant cette rainure une lame flexible 3 jouant le rôle de dispositif réducteur de bruit de résonance en roulage. Dans le cas présent, la face de liaison de la lame flexible 3 est portée par la paroi latérale 12.

Cette lame 3 s'étend dans la profondeur et la largeur de la rainure 1 de manière à fermer la rainure à la circulation d'air. Par ailleurs, cette lame 3 comprend trois nervures 41, 41', 42 de renforcement en relief, deux de ces nervures en relief étant formées sur une face principale 31 tandis que la troisième est formée sur l'autre face principale 32. Ces nervures de forme allongée et de section semi circulaire s'étendent à partir de la paroi de la bande portant la lame flexible et sur quasiment toute la longueur de la lame flexible (correspondant ici à la largeur de la rainure). En outre, ces nervures 41, 41', 42 sont disposées de manière à être en positions décalées les unes par rapport aux autres.

Chaque nervure s'étend entre une première extrémité 411 sur la paroi latérale délimitant la rainure et une seconde extrémité 412 positionnée à proximité de la face d'extrémité elle-même au située au voisinage de l'autre paroi latérale délimitant la même rainure. La longueur de chaque nervure est ici égale à 90% de la largeur totale de la lame flexible. La présence de ces nervures renforce le caractère de rappel élastique nécessaire au rappel en position de fermeture après l'arrêt d'un flux de fluide.

Dans une troisième variante de l'invention montrée avec la figure 5, une lame flexible 3 portée par le fond 13 d'une rainure 1 comprend sur ses deux faces principales 31, 32 deux nervures 41 ? 42 en relief de forme curviligne. Chaque nervure 41, 42 prend naissance sur le fond 13 de la rainure 1 et s'étend jusqu'à un coin 33, 34 de la lame proche de la paroi d'extrémité 30 destinée à venir en contact à chaque tour de roue avec la chaussée pendant le roulage.

Cette variante outre qu'elle permet de résoudre le problème posé de l'usure de la lame flexible, offre un autre avantage : celui de faciliter l'opération de moulage de la lame.

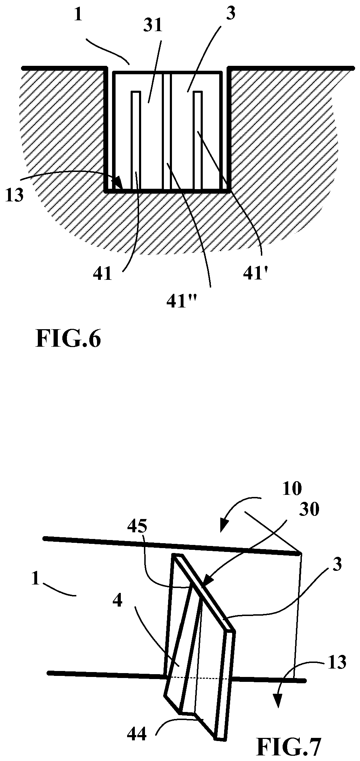

Dans une autre variante montrée avec la figure 6, on dispose, sur une face principale 31 d'une lame flexible 3 d'épaisseur égale à 0.7 mm portée par le fond 13 d'une rainure 1, trois nervures en relief 41, 41', 41" de section semi circulaire de rayon égal à 0.4 mm. La nervure intermédiaire 41", c'est-à-dire la nervure située entre les deux autres nervures 41, 41' a une longueur supérieure à la longueur des deux autres afin de permettre une répartition appropriée de l'ajout de rigidité.

Dans la cinquième variante de l'invention montrée avec la figure 7, la lame flexible 3 fixée au fond 13 d'une rainure 1 et s'étendant quasiment jusqu'à être au niveau de la surface de roulement 10 de la bande comprend une nervure en relief 4, cette nervure ayant deux extrémités 44, 45. Une première extrémité 44 est située sur la région de liaison de la lame avec le fond 13 et une seconde extrémité 45 est voisine de la paroi d'extrémité 30 de la lame 3 destinée à venir en contact avec la chaussée pendant le roulage. Entre ces deux extrémités, la nervure 4 présente une diminution régulière de son épaisseur (c'est-à-dire de sa hauteur par rapport à la lame). À son extrémité 44 sur la zone de liaison avec le fond 13 de la rainure, l'épaisseur est égale à 1 mm et à son autre extrémité 45 son épaisseur est égale à 0.2 mm.

Préférentiellement, chaque nervure a une épaisseur maximale (mesurée perpendiculairement à la lame) qui est comprise entre 0.15 et 2 fois l'épaisseur de la lame flexible. La largeur de chaque nervure (mesurée parallèlement à la lame) est avantageusement comprise entre 0.8 et 4 fois l'épaisseur de la lame flexible.

L'invention ayant été décrite de manière générale et au moyen de quelques variantes, il doit être compris que cette invention n'est pas limitée à ces seules variantes décrites et représentées. Les diverses variantes décrites ici peuvent être combinées entre elles par la personne du métier en fonction de l'objectif poursuivi sans sortir de son cadre tel que défini par les revendications.

## Revendications

1. Bande de roulement pour pneu, comprenant au moins une rainure (1), cette rainure étant délimitée par deux parois (11, 12) en vis-à-vis reliées entre elles par un fond (13) de rainure, cette rainure ayant une largeur et une profondeur, cette rainure (1) comprenant au moins un dispositif réducteur de bruit de résonance, ce dispositif étant formé d'au moins une lame (3) de gomme flexible fixée à l'une des parois (11, 12) délimitant la rainure ou sur son fond (13) et fermant au moins partiellement la section de la rainure, chaque lame flexible (3) comprenant deux parois principales (31, 32) fermant la section de la rainure, des parois d'extrémité (30) délimitant ces parois principales et une paroi de liaison avec la bande de roulement, ce dispositif étant **caractérisé en ce que** chaque lame flexible (3) comprend en outre au moins une nervure (4) en relief sur l'une au moins de ses parois principales (31, 32), cette nervure (4) en relief comprenant deux extrémités, une première extrémité (401) positionnée sur la paroi de liaison avec la bande de roulement et une seconde extrémité (402) positionnée par rapport à la paroi de liaison à une distance au moins égale à 50% de la longueur totale de la lame flexible, cette longueur de la lame flexible étant mesurée - dans une direction perpendiculaire à la paroi de liaison avec la bande de roulement - entre la paroi de liaison et la paroi d'extrémité opposée à ladite paroi de liaison.

2. Bande de roulement pour pneu selon la revendication 1 **caractérisée en ce que** chaque lame flexible (3) a une épaisseur et **en ce que** chaque nervure de relief a une épaisseur maximale qui est au moins égale à 0.15 fois l'épaisseur de la lame et au plus égale à 2 fois la même épaisseur et a une largeur maximale au moins égale à 0.8 fois l'épaisseur de la lame et au plus égale à 4 fois la même épaisseur.

3. Bande de roulement pour pneu selon la revendication 1 ou la revendication 2 **caractérisée en ce qu'**une lame flexible (3) comprend au moins une nervure (4), cette nervure ayant un tracé qui n'est pas rectiligne.

4. Bande de roulement pour pneu selon l'une des revendications 1 à 3 **caractérisée en ce que** chaque lame flexible (3) comprend au moins deux coins (33, 34) et **en ce qu'**au moins une paroi principale comprend deux nervures (41, 41') s'étendant en direction des coins (33, 34) de la lame flexible et suffisamment près desdits coins pour avoir un effet sur l'ensemble de la lame.

5. Bande de roulement pour pneu selon l'une des revendications 1 à 4 **caractérisée en ce que** des nervures (41, 41', 42) sont formées sur les deux parois principales (31, 32) d'une lame flexible (3).

6. Bande de roulement pour pneu selon la revendication 1 ou la revendication 2 **caractérisée en ce que** les nervures sont formées de façon être décalées les unes par rapport aux autres lorsque l'on considère leur répartition sur chaque paroi principale d'une lame.

7. Bande de roulement pour pneu selon l'une des revendications 1 à 6 **caractérisée en ce que** chaque nervure de relief (4) a une épaisseur qui varie de façon décroissante à partir de la face de liaison de la lame avec une paroi ou un fond de rainure.

8. Bande de roulement pour pneu selon l'une des revendications 1 à 7 **caractérisée en ce que** chaque nervure de relief a une épaisseur qui est au plus égale à 1.2 fois l'épaisseur de la lame.

## Patentansprüche

1. Lauffläche für Reifen, umfassend mindestens eine Nut (1), wobei diese Nut von zwei gegenüberliegenden Wänden (11, 12) begrenzt ist, die miteinander durch einen Nutboden (13) verbunden sind, wobei diese Nut eine Breite und eine Tiefe hat, wobei diese Nut (1) mindestens eine Vorrichtung zur Reduktion des Resonanzlärms umfasst, wobei diese Vorrichtung von mindestens einer flexiblen Gummilamelle (3) gebildet ist, die an einer der Wände (11, 12), die die Nut begrenzt, oder auf ihrem Boden (13) befestigt ist und mindestens teilweise den Querschnitt der Nut verschließt, wobei jede flexible Lamelle (3) zwei Hauptwände (31, 32), die den Querschnitt der Nut verschließen, Endwände (30), die diese Hauptwände begrenzen und eine Verbindungswand mit der Lauffläche umfasst, wobei diese Vorrichtung **dadurch gekennzeichnet ist, dass** jede flexible Lamelle (3) ferner mindestens eine reliefartige Rippe (4) an mindestens einer ihrer Hauptwände (31, 32) umfasst, wobei diese reliefartige Rippe (4) zwei Enden umfasst, ein erstes Ende (401), das an der Verbindungswand mit der Lauffläche positioniert ist, und ein zweites Ende (402), das in Bezug zur Verbindungswand in einem Abstand mindestens gleich 50 % der Gesamtlänge der flexiblen Lamelle positioniert ist, wobei diese Länge der flexiblen Lamelle - in eine Richtung senkrecht auf die Verbindungswand mit der Lauffläche - zwischen der Verbindungswand und der der Verbindungswand gegenüberliegenden Endwand gemessen wird.

2. Lauffläche für Reifen nach Anspruch 1, **dadurch gekennzeichnet, dass** jede flexible Lamelle (3) eine Dicke hat, und dass jede reliefartige Rippe eine maximale Dicke hat, die mindestens gleich 0,15-mal die Dicke der Lamelle und höchstens gleich 2-mal dieselbe Dicke ist, und eine maximale Breite mindestens gleich 0,8-mal die Dicke der Lamelle und höchstens gleich 4-mal dieselbe Dicke hat.

3. Lauffläche für Reifen nach Anspruch 1 oder Anspruch 2, **dadurch gekennzeichnet, dass** eine flexible Lamelle (3) mindestens eine Rippe (4) umfasst, wobei diese Rippe einen Verlauf hat, der nicht geradlinig ist.

4. Lauffläche für Reifen nach einem der Ansprüche 1 bis 3, **dadurch gekennzeichnet, dass** jede flexible Lamelle (3) mindestens zwei Ecken (33, 34) umfasst, und dass mindestens eine Hauptwand zwei Rippen (41, 41') umfasst, die sich in Richtung der Ecken (33, 34) der flexiblen Lamelle und nahe genug zu den Ecken erstrecken, um eine Auswirkung auf die Gesamtheit der Lamelle zu haben.

5. Lauffläche für Reifen nach einem der Ansprüche 1 bis 4, **dadurch gekennzeichnet, dass** Rippen (41, 41', 42) an den zwei Hauptwänden (31, 32) einer flexiblen Lamelle (3) ausgebildet sind.

6. Lauffläche für Reifen nach Anspruch 1 oder Anspruch 2, **dadurch gekennzeichnet, dass** die Rippen derart ausgebildet sind, dass sie zueinander versetzt sind, wenn ihre Verteilung an jeder Hauptwand einer Lamelle betrachtet wird.

7. Lauffläche für Reifen nach einem der Ansprüche 1 bis 6, **dadurch gekennzeichnet, dass** jede reliefartige Rippe (4) eine Dicke hat, die abnehmend von der Verbindungsfläche der Lamelle mit einer Wand oder einem Nutboden aus variiert.

8. Lauffläche für Reifen nach einem der Ansprüche 1 bis 7, **dadurch gekennzeichnet, dass** jede reliefartige Rippe eine Dicke hat, die höchstens gleich 1,2-mal die Dicke der Lamelle ist.

## Claims

1. Tyre tread comprising at least one groove (1), this groove being delimited by two opposing walls (11, 12) connected by a groove bottom (13), this groove having a width and a depth, this groove (1) comprising at least one resonance-noise-reducing device, this device being formed of at least one flexible rubber blade (3) fixed to one of the walls (11, 12) delimiting the groove or to the bottom (13) thereof and at least partially closing the cross section of the groove, each flexible blade (3) comprising two main walls (31, 32) closing the cross section of the groove, end walls (30) delimiting these main walls and a connecting wall connecting to the tread, this device being **characterized in that** each flexible blade (3) further comprises at least one raised rib (4) on at least one of its main walls (31, 32), this raised rib (4) comprising two ends, a first end (401) positioned on the connecting wall connecting with the tread and a second end (402) positioned with respect to the connecting wall at a distance at least equal to 50% of the total length of the flexible blade, this length of the flexible blade being measured - in a direction perpendicular to the connecting wall connecting with the tread - between the connecting wall and the end wall opposite to the said connecting wall.

2. Tyre tread according to Claim 1, **characterized in that** each flexible blade (3) has a thickness and **in that** each raised rib has a maximum thickness at least equal to 0.15 times the thickness of the blade and at most equal to 2 times the same thickness and has a maximum width at least equal to 0.8 times the thickness of the blade and at most equal to 4 times the same thickness.

3. Tyre tread according to Claim 1 or Claim 2, **characterized in that** a flexible blade (3) comprises at least one rib (4), this rib having an outline which is not rectilinear.

4. Tyre tread according to one of Claims 1 to 3, **characterized in that** each flexible blade (3) comprises at least two corners (33, 34) and **in that** at least one main wall comprises two ribs (41, 41') extending towards the corners (33, 34) of the flexible blade and sufficiently close to the said corners to have an effect on the entirety of the blade.

5. Tyre tread according to one of Claims 1 to 4, **characterized in that** ribs (41, 41', 42) are formed on the two main walls (31, 32) of a flexible blade (3).

6. Tyre tread according to Claim 1 or Claim 2, **characterized in that** the ribs are formed so that they are offset from one another when their distribution over each main wall of a blade is considered.

7. Tyre tread according to one of Claims 1 to 6, **characterized in that** each raised rib (4) has a thickness that varies decreasingly from the connecting face of the blade where the blade connects to a wall or a bottom of a groove.

8. Tyre tread according to one of Claims 1 to 7, **characterized in that** each raised rib has a thickness at most equal to 1.2 times the thickness of the blade.
